# EUROPEAN PATENT APPLICATION

(11) **EP 3 835 862 A1**
(43) Date of publication of application: **16.06.2021**
(21) Application number: 18931735.7
(22) Date of filing: 31.08.2018
(51) Int. Cl.: G03B 17/04

(54) **TURNING DEVICE AND CAMERA HAVING TURNING DEVICE**

(71) Applicant: SZ DJI Technology Co., Ltd., Shenzhen, Guangdong 518057 (CN)
(72) Inventor: TANG, Yin, Shenzhen, Guangdong 518057 (CN); PENG, Tao, Shenzhen, Guangdong 518057 (CN); CHEN, Junqiang, Shenzhen, Guangdong 518057 (CN)
(74) Representative: Goddar, Heinz J.
(86) International application number: PCT/CN2018/103653
(87) International publication number: WO 2020/042173

(57) **Abstract**

A flip device (100) and a camera (1000). The flip device (100) includes a bracket (10), a rotation-shaft rocker arm (20), and a positioning and connection assembly (30). The bracket (10) includes a first limit member (11); the positioning and connection assembly (30) includes a second limit member (31) for mating with the first limit member (11); the rotation-shaft rocker arm (20) is rotatably connected to the bracket (10) through the positioning and connection assembly (30), the first limit member (11) mates with the second limit member (31) to enable the rotation-shaft rocker arm (20) and the bracket (10) to be fixed relative to each other at a preset angle.

## Description

### TECHNICAL FIELD

The present disclosure relates to the field of cameras and, more particularly to a flip device and a camera with the flip device.

### BACKGROUND

In the camera industry, when a screen is used for view finding, in order to facilitate users to view from different shooting angles, the camera is provided with a flip-screen, and a certain angle can be formed between the flip screen and the camera body. However, usually the flip-screen can only be fixed at a certain angle. When the user uses the camera screen to check the view and requires viewing from multiple angles, the user cannot look straight at the camera screen at this angle, therefore the visual effect and user experience are poor.

### SUMMARY

The embodiments of the disclosure provide a flip device and a camera with the flip device.

According to the embodiments of the disclosure, the flip device includes a bracket, a rotation-shaft rocker arm, and a positioning and connection assembly. The bracket includes a first limit member, the positioning and connection assembly includes a second limit member for mating with the first limit member, and the rotation-shaft rocker arm is rotatably connected to the bracket through the positioning and connection assembly. The first limit member mates with the second limit member to enable the rotation-shaft rocker arm and the bracket to be fixed relative to each other at a preset angle.

The flip device according to the embodiments of the disclosure is provided with a first limit member and a positioning and connection assembly. When the first limit member mates with a second limit member of the positioning and connection assembly, the rotation-shaft rocker arm and the bracket are fixed relative to each other at a preset angle, therefore, it is not easy to shake. In addition, the rotation-shaft rocker arm or the bracket can be continuously rotated, so that the rotation-shaft rocker arm and the bracket are fixed relative to each other at multiple different preset angles. The switching operation among the preset angles is simple.

A camera according to the embodiments of the disclosure includes a camera body, a screen, and the flip device described in the above embodiments. The other end of the rotation-shaft rocker arm is connected to the camera body, and the screen is fixed at the bracket.

The flip device according to the embodiments of the disclosure is provided with a first limit member and a positioning and connection assembly. When the first limit member mates with a second limit member of the positioning and connection assembly, the rotation-shaft rocker arm and the bracket are fixed relative to each other at the preset angle, therefore, it is not easy to shake, which facilitates the user looking directly at the screen of the camera at the preset angle and provides a good visual effect. In addition, the user can continue to rotate the rotation-shaft rocker arm or the bracket so that the rotation-shaft rocker arm and the bracket are fixed at multiple different preset angles. The switching operation among the multiple preset angles is simple, and the user experience is good.

In the camera of the embodiments of the disclosure, the flip device includes a bracket, a rotation-shaft rocker arm, and a positioning and connection assembly. The rotation-shaft rocker arm is rotatably connected with the bracket through the positioning and connection assembly, and can switch between a rotation state and a fixation state with a change of the rotation angle.

The flip device according to the embodiments of the disclosure includes a positioning and connection assembly. The rotation-shaft rocker arm and the bracket can be fixed relative to each other at a preset angle through the positioning and connection assembly, therefore, it is not easy to shake. In addition, the rotation-shaft rocker arm or the bracket can be continuously rotated, so that the rotation-shaft rocker arm and the bracket are fixed relative to each other at multiple different preset angles. The switching operation among the preset angles is simple.

The additional aspects and advantages of the implementation of this disclosure will be partly given in the following description, and part of it will become obvious with the following description, or will be understood through a practice of this disclosure.

### BRIEF DESCRIPTION OF THE DRAWINGS

The above-described and/or additional aspects and advantages of this disclosure will become obvious and easy to understand from the description of the embodiments with reference to the following accompanying drawings.
FIG. 1 is a schematic structural diagram of a flip device according to an embodiment of the disclosure.
FIG. 2 is a schematic exploded view of the flip device in FIG. 1.
FIG. 3 is a schematic structural diagram showing shapes of a first hole, a second hole, a third hole, and a fourth hole according to an embodiment of the disclosure.
FIG. 4 is a schematic enlarged structural diagram of a part of the flip device in FIG. 2.
FIG. 5 is a schematic structural diagram of a camera according to an embodiment of the disclosure.
FIGs. 6-8 are schematic diagrams showing application scenarios of the camera at different angles according to embodiments of the disclosure.

### Reference Numerals:

100 - Flip Device 10 - Bracket 11 - First Limit Member 111 - Third Hole 112 - First Limit Portion 1121 - Limit Slot 113 - First Limit Surface 12 - Body 121 - First Side 122 - Second Side 13 - Accommodation Slot 20 - Rotation-Shaft Rocker Arm 21 - One End 22 - Other End 23 - Side Wall 24 - Connection Portion 25 - Fourth Hole 30-Positioning and Connection assembly 31 - Second Limit Member 311 - Second Hole 312 - Second Limit Portion 3121 - Protrusion 313 - Second Limit Surface 32 - Fastener 321 - Shaft Portion 322 - End Portion 33 - Elastic Member 331 - Elastic Sheet 332-First Hole 1000 - Camera 200 - Camera Body 201 - Receiving Slot 300 - Screen

### DETAILED DESCRIPTION OF THE EMBODIMENTS

The embodiments of the present disclosure are described as follows in detail, and examples of the embodiments are shown in the accompanying drawings, where the same or similar reference numerals indicate the same or similar elements or elements with the same or similar functions throughout. The following embodiments described with reference to the accompanying drawings are exemplary, and are only used to explain the disclosure and should not be understood as a limitation to the disclosure.

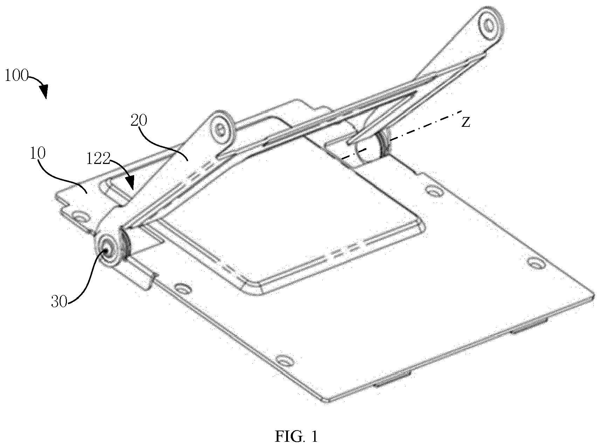

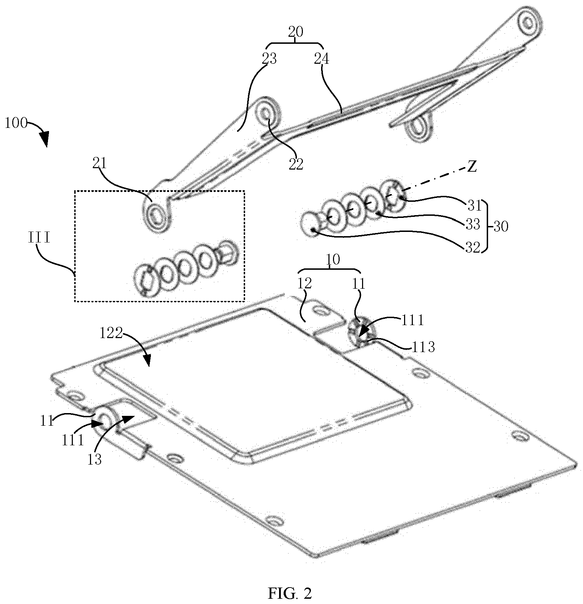

Referring to FIGs. 1 and 2, a flip device 100 according to an embodiment of the disclosure includes a bracket 10, a rotation-shaft rocker arm 20 and a positioning and connection assembly 30. The bracket 10 include a first limit member 11. The positioning and connection assembly 30 includes a second limit member 31 for mating with the first limit member 11. The rotation-shaft rocker arm 20 is rotatably connected with the support 10 through the positioning and connection assembly 30. The first limit member 11 mates with the second limit member 31 to enable the rotation-shaft rocker arm 20 and the bracket 10 to be fixed relative to each other at a preset angle.

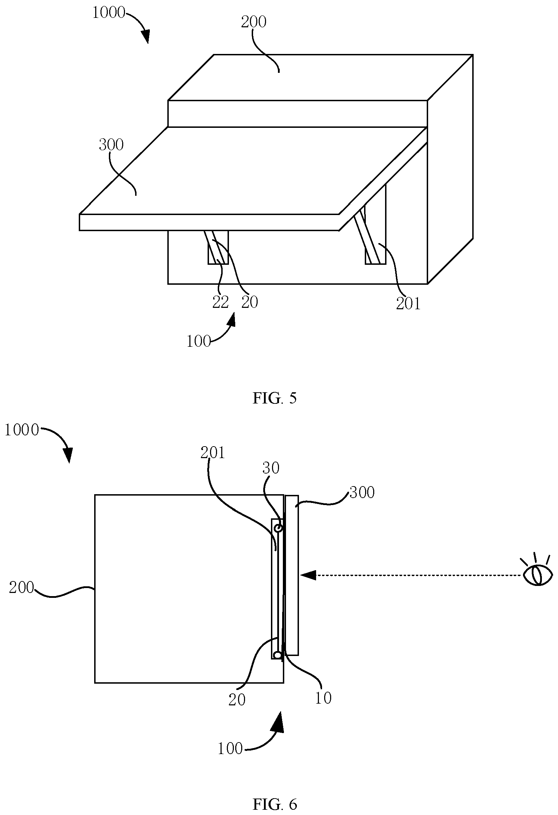

Specifically, the flip device 100 of the embodiments of the present disclosure can be applied to a structure that requires angle adjustment, such as an angle adjustment between a camera body 200 and a screen 300 of a camera 1000 shown in FIG. 5, and an angle adjustment between a display screen of a display and a base, and so on. The camera 1000 is used as an example in this disclosure.

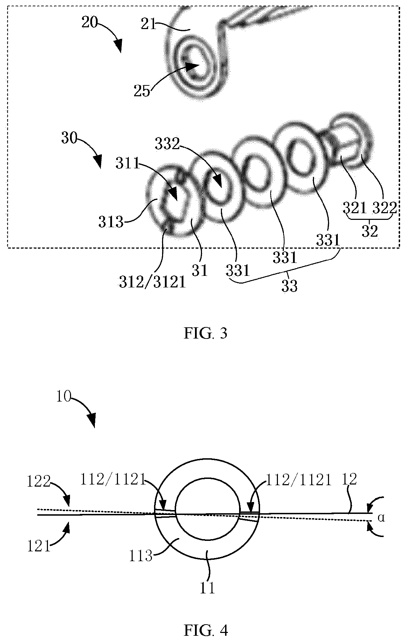

The first limit member 11 is disposed at the bracket 10. The first limit member 11 is fixedly connected to the bracket 10, for example, by welding or integral molding. The bracket 10 includes a body 12, and the body 12 includes a first side 121 (as shown in FIG. 4) and a second side 122 opposite to each other. The first side 121 of the body 12 can be used to carry objects, such as the screen 300 of the camera 1000 shown in FIG. 5, so as to adjust the angle between the screen 300 and the camera body 200. When the bracket 10 is connected to the rotation-shaft rocker arm 20, the rotation-shaft rocker arm 20 may be disposed at the second side 122.

The rotation-shaft rocker arm 20 includes two opposite ends. One end 21 is rotatably connected to the bracket 10, and the other end 22 can be a free end, or can be fixedly connected to other devices, such as the camera body 200 of the camera 1000 shown in FIG. 4. The rotation-shaft rocker arm 20 may be in a shape of a separate rod or in a shape of a flat plate. In the embodiments, the rotation-shaft rocker arm 20 includes two side walls 23 and a connection portion 24 connecting the two side walls 23.

The one end 21 of the rotation-shaft rocker arm 20 is rotatably connected with the bracket 10 through the positioning and connection assembly 30. Specifically, the positioning and connection assembly 30 includes a second limit member 31 for mating with the first limit member 11. The first limit member 11 mates with the second limit member 31 to enable the rotation-shaft rocker arm 20 and the bracket 10 to be fixed relative to each other at a preset angle. The mating manner of the first limit member 11 and the second limit member 31 may include snapping, screwing, or the like. The second limit member 31 can rotate synchronously with the rotation-shaft rocker arm 20. When the rotation-shaft rocker arm 20 rotates relative to the bracket 10, the second limit member 31 also rotates relative to the bracket 10.

In this embodiment, the preset angle can be any angle between 0 degrees and 180 degrees (including 0 degrees and 180 degrees). There may be a single preset angle. For example, the preset angle is 0 degrees, 30 degrees, 53 degrees, 107 degrees, or 120 degrees. By rotating the rotation-shaft rocker arm 20 or the bracket 10, the positioning and connection assembly 30 can make the rotation-shaft rocker arm 20 and the bracket 10 be fixed relative to each other at 0 degrees, 30 degrees, 53 degrees, 107 degrees, or 120 degrees. Among them, when the preset angle is 0 degrees, the rotation-shaft rocker arm 20 fits the body 12 of the bracket 10, when the preset angle is 53 degrees, the angle formed between the rotation-shaft rocker arm 20 and the bracket 10 is 53 degrees, and when the preset angle is 107 degrees, the angle formed between the rotation-shaft rocker arm 20 and the bracket 10 is 107 degrees.

There may be multiple preset angles. The multiple preset angles are non-uniformly distributed along a rotation plane (a plane perpendicular to the Z axis as shown in FIG. 1) of the rotation-shaft rocker arm 20 and the bracket 10, or the preset angles are uniformly distributed along the rotation plane. For example, there are three preset angles: 0 degrees, 53 degrees and 107 degrees. When the rotation-shaft rocker arm 20 rotates relative to the bracket 10, the first limit member 11 mates with different limit portions of the second limit member 31, or the second limit member 31 mates with different first limit members 11, thereby achieving a switch between multiple preset angles. In an optional embodiment, the second limit member 31 has different limit portions. These limit portions are arranged radially with respect to a preset axis of the second limit member 31 and the positions of the limit portions are relatively fixed, so that when the first limit portion rotates, a rotation relative to it can be generated, therefore the first limit member 11 and the second limit member 31 can realize a switch between different angles during the rotation. For example, when the preset angle is switched from 53 degrees to 107 degrees, a certain external force is applied to the rotation-shaft rocker arm 20 or the bracket 10 to make the rotation-shaft rocker arm 20 rotate relative to the bracket 10 and drive the second limit member 31 to rotate relative to the first limit member 11 until the second limit member 31 and the first limit member 11 mate again, so that the angle between the rotation-shaft rocker arm 20 and the bracket 10 is changed from 53 degrees to 107 degrees. With the mate of the first limit member 11 and the second limit member 31, the rotation-shaft rocker arm 20 and the bracket 10 can be fixed relative to each other at multiple different preset angles. Even if there is a shaking or a small external force, the angle between the rotation-shaft rocker arm 20 and the bracket 10 will not be easily changed, which ensures a stability of a fixed object on the bracket 10.

In summary, the flip device 100 of the embodiments of the present disclosure is provided with the first limit member 11 and the positioning and connection assembly 30. When the first limit member 11 mates with the second limit member 31 of the positioning and connection assembly 30, the rotation-shaft rocker arm 20 and the bracket 10 are fixed relative to each other at a preset angle relative, therefore, it is not easy to shake. In addition, the rotation-shaft rocker arm 20 or the bracket 10 can be continuously rotated, so that the rotation-shaft rocker arm 20 and the bracket 10 are fixed relative to each other at multiple different preset angles. The switching operation among the preset angles is simple.

Referring to FIG. 2, in this embodiment, there may be a single first limit member 11, or multiple first limit members 11. When there is a single first limit member 11, the single first limit member 11 is used to mate with the single second limit member 31. The single first limit member 11 may be disposed at any end of the body 12 of the bracket 10, for example, a left end or a right end of the body 12 shown in FIG. 2. When there are multiple first limit members 11, the multiple first limit members 11 are connected to at least two ends of the body 12, and the multiple first limit members 11 are all used to mate with the second limit member 31. In the embodiment shown in FIG. 2, two first limit members 11 are sequentially connected to the left end and the right end of the body 12 and respectively mate with the second limit member 31 at the left end and the second limit member 31 at the right end.

Referring to FIG. 2, in this embodiment, the positioning and connection assembly 30 further includes a fastener 32. The fastener 32 is used for fixedly connecting the rotation-shaft rocker arm 20 and the second limit member 31. Under the restriction of the fastener 32, the fastener 32 and the second limit member 31 form a revolute joint. When the rotation-shaft rocker arm 20 rotates relative to the bracket 10, the fastener 32 drives the second limit member 31 to rotate along with the rotation-shaft rocker arm 20, thereby causing the second limit member 31 to rotate relative to the first limit member 11. Further, in this embodiment, the rotation-shaft rocker arm 20 can rotate around a preset axis (such as a Z axis in FIG. 1) relative to the bracket 10, and the fastener 32 is used to fix the rotation-shaft rocker arm 20, the first limit member 11 and the second limit member 31 in an axial direction along the preset axis. In this embodiment, the preset axis at the left end may be collinear with the preset axis at the right end, and the positioning and connection assembly 30 and the bracket 10 at the left end, and the positioning and connection assembly 30 and the bracket 10 at the right end are disposed in mirror symmetry. When the flip device 100 is assembled, the fastener 32 at the left end passes through the second limit member 31, the first limit member 11, and the rotation-shaft rocker arm 20 in turn toward the left, and the fastener 32 at the right end passes through the second limit member 31, the first limit member 11, and the rotation-shaft rocker arm 20 in turn toward the right. The fastener 32 in this embodiment may be a rivet, a screw, a bolt, etc.

Referring to FIG. 2, in this embodiment, the positioning and connection assembly 30 further includes an elastic member 33. The elastic member 33 is disposed between the fastener 32 and the second limit member 31. The elastic member 33 is used for applying elastic force to the second limit member 31 along an axial direction of a preset axis, so that the second limit member 31 abuts against the first limit member 11. Specifically, the fastener 32, the elastic member 33 and the second limit member 31 form a revolute joint. The fastener 32 abuts against the elastic member 33, the elastic member 33 abuts against the second limit member 31, and the second limit member 31 abuts against the first limit member 11. Therefore, the first limit member 11 and the second limit member 31 fit more closely, and the connection between the rotation-shaft rocker arm 20 and the bracket 10 is more reliable. In this embodiment, the elastic member 33 is made of elastic material, for example, a metal elastic piece, a spring member, an elastic rubber member, etc. The shape of the first limit member 11 and the second limit member 31 may be consistent with the shape of the elastic member 33, for example, the elastic member 33 is round, and the first limit member 11 and the second limit member 31 may also be round.

Further, referring to FIG. 3, in this embodiment, the elastic member 33 is an elastic sheet 331. The number of the elastic sheets 331 may be one or at least two, such as two, three, four, five, more than five, and so on. The number of elastic sheets 331 can be specifically set according to a thickness of the elastic sheet 331 on a preset axis, and an elastic force need of the second limit member 31 and the first limit member 11. A larger number of elastic sheets can provide a larger amount of elastic force under a same rotation angle. When the number of the elastic sheets 331 is one, the single elastic sheet 331 may be disposed between the fastener 32 and the second limit member 31, and in turn abut against the fastener 32 and the second limit member 31. When the number of elastic sheets 331 is at least two, the at least two elastic sheets 331 are disposed between the fastener 32 and the second limit member 31. In the embodiment of FIG. 2, the number of elastic sheets 331 is three, and the three elastic sheets 331 are sequentially stacked and disposed between the fastener 32 and the second limit member 31. The elastic sheets 331 can also be disposed between the first limit member 11 and the rotation-shaft rocker arm 20.

Referring to FIGs. 2 and 3, in this embodiment, the elastic member 33 is provided with a first hole 332, the second limit member 31 is provided with a second hole 311, the first limit member 11 is provided with a third hole 111, and the rotation-shaft rocker arm 20 is provided with a fourth hole 25. The fastener 32 includes a shaft portion 321, and the shaft portion 321 passes through the first hole 332, the second hole 311, the third hole 111 and the fourth hole 25 in sequence. Under the restriction of the shaft portion 321, the rotation-shaft rocker arm 20 can rotate about the shaft portion 321 relative to the bracket 10, that is, the preset axis coincides with the shaft portion 321 (as shown in FIG. 2, the Z axis coincides with the shaft portion 321). In addition, the fastener 32 also includes an end portion 322, and the end portion 322 is connected to the shaft portion 321. When the elastic member 33, the second limit member 31, the first limit member 11, and the rotation-shaft rocker arm 20 are disposed around the shaft portion 321, the end portion 322 abuts against the elastic member 33 to prevent the elastic member 33, the second limit member 31, the first limit member 11, and the rotation-shaft rocker arm 20 from escaping along the direction of the preset axis. Therefore, under the restriction of the shaft portion 321 and the end portion 322 of the fastener 32, the fastener 32 can fix the rotation-shaft rocker arm 20 and the second limit member 31 in the direction of the preset axis and the direction of rotation around the preset axis.

Referring to FIG. 3, in this embodiment, the shape of the shaft portion 321 of the fastener 32 matches the shapes of the second hole 311 provided at the second limit member 31 and the fourth hole 25 provided at the rotation-shaft rocker arm 20. For example, the shaft portion 321 is in contact with an outer contour of the second hole 311, and the shaft portion 321 is in contact with an outer contour of the fourth hole 25. When the shaft portion 321 passes through the first hole 332, the second hole 311, the third hole 111 and the fourth hole 25, because the shape of the shaft portion 321 matches the shape of the second hole 311 and the fourth hole 25, the fastener 32 and the second limit member 31 do not rotate relative to the shaft portion 321, however the shaft portion 321 rotates with the rotation-shaft rocker arm 20 to drive the second limit member 31 to rotate, thereby causing the elastic sheet 331 and the second limit member 31 to rotate relative to the first limit member 11.

Further, in this embodiment, a cross-section of the shaft portion 321 of the fastener 32, the second hole 311 provided at the second limit member 31, and the fourth hole 25 provided at the rotation-shaft rocker arm 20 have a same first shape. Among them, the first shape may be one of a racetrack shape, a rectangle, a triangle, an ellipse, a regular pentagon, a regular hexagon, or the like. For example, the cross-section of the shaft portion 321 is racetrack-shaped, and the second hole 311 provided at the second limit member 31 is also racetrack-shaped. Furthermore, the same first shape causes the fastener 32 to rotate when the rotation-shaft rocker arm 20 rotates, thereby driving the second limit member 31 to rotate. Specifically, when the fastener 32 rotates relative to the first limit member 11, the shaft portion 321 can drive the second limit member 31 to rotate. For another example, the cross-section of the shaft portion 321 is racetrack-shaped, and the fourth hole 25 provided at the rotation-shaft rocker arm 20 is also racetrack-shaped, so that when the rotation-shaft rocker arm 20 rotates relative to the bracket 10, the rotation-shaft rocker arm 20 can drive the shaft portion 321 to rotate.

In this embodiment, the first shape is inscribed in the first hole 332, that is, the opening size of the first hole 332 provided at the elastic member 33 is larger than the cross-section size of the shaft portion 321, so that when the fastener 32 rotates, the shaft portion 321 can rotate relative to the elastic member 33. For example, the first shape is a racetrack shape, and the shape of the first hole 332 is a circle. When the rotation-shaft rocker arm 20 rotates relative to the bracket 10, the shaft portion 321 rotates along the rotation-shaft rocker arm 20, however the elastic member 33 may not follow the shaft portion 321 to rotate. In addition, the first shape is inscribed in the third hole 111, that is, the opening size of the third hole 111 provided at the first limit member 11 is larger than the cross-section size of the shaft portion 321, so that when the fastener 32 rotates, the shaft portion 321 can rotate relative to the first limit member 11. For example, the first shape is a racetrack shape, and the shape of the third hole 111 is a circle. When the rotation-shaft rocker arm 20 rotates relative to the bracket 10, the shaft portion 321 rotates along the rotation-shaft rocker arm 20, however the first limit member 11 may not follow the shaft portion 321 to rotate.

Referring to FIGs. 3 and 4, in this embodiment, a first limit portion 112 is formed at the first limit member 11, and a second limit portion 312 is formed at the second limit member 31 to fit with the first limit portion 112. Specifically, the first limit member 11 includes a first limit surface 113, and the first limit portion 112 is formed at the first limit surface 113. The second limit member 31 includes a second limit surface 313, and the second limit portion 312 is formed at the second limit surface 313. When the first limit member 11 and the second limit member 31 fit together, the first limit surface 113 and the second limit surface 313 abut against each other, and the first limit portion 112 and the second limit portion 312 fit together.

Referring to FIGs. 3 and 4, in this embodiment, the first limit portion 112 may be a limit slot 1121 and the second limit portion 312 may be a protrusion 3121. That is, the limit slot 1121 is formed at the first limit member 11, and the protrusion 3121 is formed at the second limit member 31. When the first limit member 11 and the second limit member 31 mate, the protrusion 3121 extends into the limit slot 1121. Under the restriction of a side wall 23 of the limit slot 1121, it is difficult for the protrusion 3121 to move out of the limit slot 1121 in a circumferential direction of the first limit member 11 under shaking or a small external force. In an example, the protrusion 3121 and the limit slot 1121 are in an interference fit, and the idle part of the rotation of the rotation-shaft rocker arm 20 and the bracket 10 is small. In this way, the first limit member 11 and the second limit member 31 fit closely. In another embodiment, the first limit portion 112 may also be a protrusion, and the second limit portion 312 may be a limit slot, that is, the protrusion is formed at the first limit member 11, and the limit slot is formed at the second limit member 31.

Referring to FIGs. 3 and 4, in this embodiment, there are multiple first limit portions 112. There may be single or multiple second limit portions 312. When there is a single second limit portion 312, the single second limit portion 312 mates with one first limit portion 112 of the multiple first limit portions 112 to enable the rotation-shaft rocker arm 20 and the bracket 10 to be fixed relative to each other at different preset angles. When the rotation-shaft rocker arm 20 rotates about a preset axis relative to the bracket 10, the single second limit portion 312 can sequentially mate with one first limit portion 112, so as to realize a multi-gear (preset angles) switch. At this time, the number of preset angles is the same as the number of the first limit portions 112. When there are multiple second limit portions 312, the second limit portions 312 mate with different first limit portions 112 of the multiple first limit portions 112, so that the rotation-shaft rocker arm 20 and the bracket 10 can be fixed relative to each other at different preset angles. For example, there are two second limit portions 312. When the rotation-shaft rocker arm 20 rotates about a preset axis relative to the bracket 10, the two second limit portions 312 can sequentially mate with the two first limit portions 112 to achieve a multi-gear (preset angles) switch. In addition, the mate of the multiple second limit portions 312 and the multiple first limit portions 112 can increase a mating force of the second limit member 31 and the first limit member 11, so that the first limit member 31 and the second limit member 11 fit more closely and reliably.

Referring to FIGs. 2 and 4, in this embodiment, a plurality of sets of radially paired first limit portions 112 are distributed at the first limit member 11 in a circumferential direction of a preset axis. When there are multiple second limit portions 312, the multiple first limit portions 112 are distributed at the first limit member 11 in the circumferential direction of the preset axis. In a radial direction of the preset axis, the two opposite first limit portions 112 constitute a set of first limit portions 112. The plurality of sets of first limit portions 112 form at least two sets of different preset angles. The multiple second limit portions 312 mate with at least one set of first limit portions 112 so that the rotation-shaft rocker arm 20 and the bracket 10 can be fixed relative to each other at a preset angle.

By changing the distribution of the multiple first limit portions 112 at the first limit member 11, the preset angle can be changed. For example, the number of the second limit portions 312 is two, the number of the first limit portions 112 is six (as shown in FIG. 2), the number of the sets of the first limit portions 112 is three, and the number of the first limit portions 112 in each set is two. Each set of the first limit portions 112 is evenly distributed at the first limit member 11 in the axial direction of the preset axis, and the preset angle may be 0 degrees, 60 degrees, or 120 degrees. When the rotation-shaft rocker arm 20 rotates about a preset axis relative to the bracket 10, the two second limit portions 312 can mate with a set of first limit portions 112 in sequence, so that the rotation-shaft rocker arm 20 and the bracket 10 can be fixed relative to each other in turn at 0 degrees, 60 degrees or 120 degrees, thereby achieving a multi-gear switch. In other embodiments, the number of the second limit portions 312 is two, the number of the first limit portions 112 is six, the number of the sets of the first limit portions 112 is three, and the number of the first limit portions 112 in each set is two. Each set of the first limit portions 112 is randomly distributed at the first limit member 11 in the axial direction of the preset axis, and the preset angle formed may be 0 degrees, 53 degrees, or 107 degrees.

Referring to FIGs. 3 and 4, in this embodiment, one set of the plurality of sets of radially paired first limit portions 112 is at a small angle α to a plane of the bracket 10. When the second limit portion 312 and the first limit portion 112 mate, there is a prestress between the bracket 10 and the rotation-shaft rocker arm 20.

Specifically, a connection line between one set of the first limit portions 112 of the plurality of sets of radially paired first limit portions 112 forms a small angle α with a plane where the body 12 is located. When the second limit portion 312 mates with the first limit portion 112 to enable the rotation-shaft rocker arm 20 and the bracket 10 to be fixed relative to each other at 0 degrees, the first limit member 11 applies to the second limit member 31 a force toward a first side 121. Therefore, the body 12 applies to the rotation-shaft rocker arm 20 a prestress toward the first side 121, so that the rotation-shaft rocker arm 20 and the body 12 are in a mutually clamped state. In this embodiment, a range of the small angle α is (0, 3] degrees, such as 0.5 degrees, 1.5 degrees, 2 degrees, 2.5 degrees, 3 degrees, etc. The larger the small angle α, the greater the prestress between the rotation-shaft rocker arm 20 and the body 12.

Referring to FIG. 2, in this embodiment, an accommodation slot 13 recessed inward from a side of the body 12 is formed at the body 12. The first limit member 11 extends along the side of the body 12 and partially covers a gap of the accommodation slot 13. The first limit member 11 and a plane where the body 12 of the bracket 10 is located form an included angle that is not zero degrees. When the rotation-shaft rocker arm 20 is connected to the bracket 10 through the positioning and connection assembly 30, the positioning and connection assembly 30 is at least partially accommodated inside the accommodation slot 13. When the flip device 100 is assembled, the rotation-shaft rocker arm 20 is arranged close to one side of the first limit member 11, the second limit member 31 is arranged close to the other side of the first limit member 11, the elastic member 33 is arranged close to the second limit member 31, the fastener 32 is arranged close to the elastic member 33, and the shaft portion 321 sequentially passes through the first hole 332 at the elastic member 33, the second hole 311 at the second limit member 31, the third hole 111 at the first limit member 11, and the fourth hole 25 at the rotation-shaft rocker arm 20. The first limit member 11 can also extend from the body 12 along a direction of the first side 121 pointing to a second side 122. In this way, the body 12 does not need to form the accommodation slot 13 for accommodating the positioning and connection assembly 30.

In this embodiment, the second limit member 31 may also be disposed at the rotation-shaft rocker arm 20. When the flip device 100 is assembled, the fastener 32 passes through the first hole 332 at the elastic member 33, the fourth hole 25 (that is, the second hole 311 at the second limit member 31) at the rotation-shaft rocker arm 20, and the third hole 111 at the first limit member 11 to realize a connection between the rotation-shaft rocker arm 20 and the bracket 10.

Referring to FIG. 5, a camera 1000 according to an embodiment of the disclosure includes a camera body 200, a screen 300 and a flip device 100. The other end 22 of the rotation-shaft rocker arm 20 is connected to the camera body 200, and the screen 300 is fixed at the bracket 10.

The camera 1000 of the embodiments of the disclosure may be a film camera, a digital camera, a single-lens reflex camera, or the like. The camera body 200 is provided with a viewfinder such as a lens for shooting a target object. Referring to FIG. 2, one end 21 of the rotation-shaft rocker arm 20 is connected to the bracket 10, and the other end 22 is connected to the camera body 200. The screen 300 is fixed at the bracket 10 of the flip device 100. The screen 300 may be a display screen, a touch screen, or the like, and the screen 300 can display the content of a view taken by the camera 1000.

Under a scenario where a relative position of the other end 22 of the rotation-shaft rocker arm 20 and the camera body 200 remains unchanged, the mate of the first limit member 11 and the second limit member 31 can realize that the bracket 10 and the rotation-shaft rocker arm 20 are fixed relative to each other at a preset angle, so that the screen 300 and the bracket 10 can also be fixed relative to each other at the preset angle. Specifically, for example, there are three preset angles of 0 degrees, 53 degrees and 107 degrees. When the bracket 10 and the rotation-shaft rocker arm 20 are fixed relative to each other at 0 degrees, the screen 300 and the rotation-shaft rocker arm 20 are fixed relative to each other at 0 degrees and form an included angle with the camera body 200. When the bracket 10 and the rotation-shaft rocker arm 20 are fixed relative to each other at 53 degrees, the screen 300 and the rotation-shaft rocker arm 20 are fixed relative to each other at 53 degrees and form another included angle with the camera body 200. When the bracket 10 and the rotation-shaft rocker arm 20 are fixed relative to each other at 107 degrees, the screen 300 and the rotation-shaft rocker arm 20 are fixed relative to each other at 107 degrees and form another included angle with the camera body 200. Therefore, a user can adjust the angle between the screen 300 and the camera body 200 by adjusting the angle between the bracket 10 and the rotation-shaft rocker arm 20, and the user can look directly at the screen 300 of the camera 1000, thereby facilitating the user shooting from different shooting angles.

In summary, in the camera 1000 of the embodiments of the present disclosure, the flip device 100 is provided with the first limit member 11 and the positioning and connection assembly 30. When the first limit member 11 mates with the second limit member 31 of the positioning and connection assembly 30, the rotation-shaft rocker arm 20 and the bracket 10 are fixed relative to each other at a preset angle, therefore, it is not easy to shake, which facilitates the user looking directly at the screen 300 of the camera 1000 at the preset angle and provides a good visual effect. In addition, the user can continue to rotate the rotation-shaft rocker arm 20 or the bracket 10 so that the rotation-shaft rocker arm 20 and the bracket 10 are fixed at multiple different preset angles. The switching operation between the multiple preset angles is simple, and the user experience is good.

Referring to FIG. 5, in this embodiment, a receiving slot 201 is formed at the camera body 200. The other end 22 of the rotation-shaft rocker arm 20 is connected in the receiving slot 201. The rotation-shaft rocker arm 20 can rotate relative to the camera body 200 so that a side wall 23 of the rotation-shaft rocker arm 20 extends into or out of the receiving slot 201. Specifically, in the embodiment of FIG. 2, the rotation-shaft rocker arm 20 includes two side walls 23 and a connection portion 24, and the connection portion 24 connects the two side walls 23. The shape and number of the receiving slot 201 correspond to the shape and number of the side wall 23. In other examples, the shape of the receiving slot 201 corresponds to the overall shape of the rotation-shaft rocker arm 20, that is, the receiving slot 201 can not only accommodate the two side walls 23 of the rotation-shaft rocker arm 20, but also the connection portion 24. The other end 22 of the rotation-shaft rocker arm 20 is rotatably connected with the camera body 200, such as hinged. The side wall 23 includes two opposite ends. One end 21 is rotatably connected to the bracket 10 through the positioning and connection assembly 30, and the other end 22 is rotatably connected to the camera body 200.

The other end 22 of the side wall 23 can rotate relative to the camera body 200 to any angle from 0 degrees to 180 degrees (including 0 degrees and 180 degrees). Referring to FIG. 6, specifically, when the other end 22 of the side wall 23 rotates to 0 degrees or 180 degrees relative to the camera body 200, and the rotation-shaft rocker arm 20 and the bracket 10 are fixed relative to each other at 0 degrees through the positioning and connection assembly 30 (that is, the rotation-shaft rocker arm 20 and the bracket 10 are in a clamped state), the two side walls 23 both extend into the receiving slot 201, and the connection portion 24 fit the camera body 200 so that the screen 300 is folded to fit the camera body 200 and the appearance of the camera body 200 is beautiful.

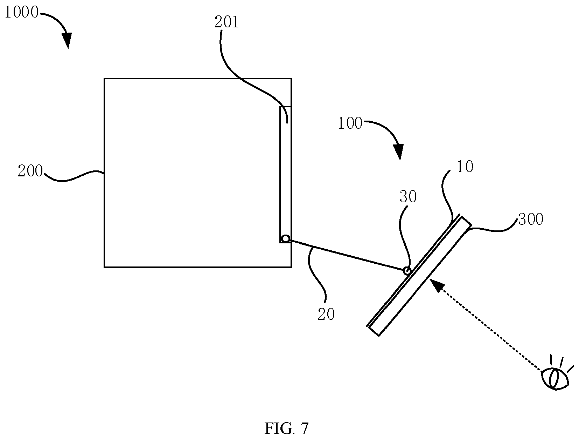

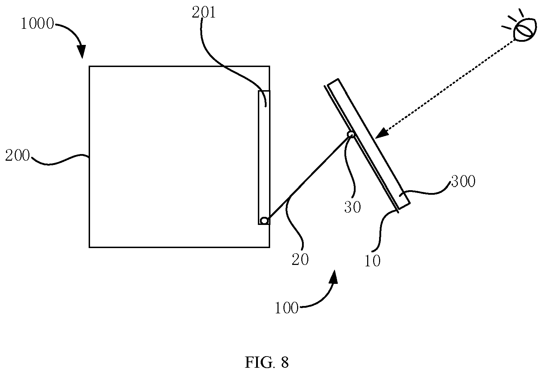

The user can adjust the preset angle between the rotation-shaft rocker arm 20 and the bracket 10, and the angle between the rotation-shaft rocker arm 20 and the camera body 200, so as to perform multi-angle shooting. In addition, the user can look directly at the screen 300 at the preset angle and the visual effect is good. For example, referring to FIG. 6, the user can look directly at the screen 300 when the screen 300 is folded to fit the camera body 200, so as to shoot a target object directly in front of the user (the direction in which the user looks directly at). Referring to FIG. 7, the user can adjust the angle between the screen 300 and the camera body 200, so that the user can look directly at the screen 300 when looking up and shoot a target object above the user (above the user's eyes, and in a direction that the user needs to look up), such as shooting fruits on a tree. Referring to FIG. 8, the user can adjust the angle between the screen 300 and the camera body 200, so that the user can look directly at the screen 300 when looking down and shoot a target object below the user (above the user's eyes, and in a direction that the user needs to look down), such as shooting flowers on the ground.

Referring to FIGs. 1 and 2, a flip device 100 according to an embodiment of the present disclosure includes a bracket 10, a rotation-shaft rocker arm 20, and a positioning and connection assembly 30. The rotation-shaft rocker arm 20 is rotatably connected with the bracket 10 through the positioning and connection assembly 30, and can switch between a rotation state and a fixation state with a change of the rotation angle.

The flip device 100 according to the embodiments of the present disclosure includes the positioning and connection assembly 30. The rotation-shaft rocker arm 20 and the bracket 10 can be fixed relative to each other at a preset angle through the positioning and connection assembly 30, therefore, it is not easy to shake. In addition, the rotation-shaft rocker arm 20 or the bracket 10 can be continuously rotated, so that the rotation-shaft rocker arm 20 and the bracket 10 are fixed relative to each other at multiple different preset angles. The switching operation between the multiple preset angles is simple.

In one possible embodiment, a flip device is provided and includes a bracket, a rotation-shaft rocker arm, and a positioning and connection assembly for connecting the bracket and the rotation-shaft rocker arm. The bracket includes a bracket body, and a first limit member is disposed at one side or both sides of the bracket body. The rotation-shaft rocker arm include a rocker arm portion and a body, and one end of the rocker arm portion is connected with the first limit member at a side of the bracket through the positioning and connection assembly. In addition, the rocker arm portion can rotate relative to a connection shaft formed at the connection, and rotate relative to the bracket. The positioning and connection assembly includes a second limit member. Because the first limit member is fixed relative to the bracket body and the second limit member rotates relative to the bracket body, the mate of the first limit member and the second limit member can enable the rotation-shaft rocker arm and the bracket to be fixed relative to each other at different preset angles. In this way, the bracket and the rotation-shaft rocker arm of the flip device can be relatively opened at different angles.

In one possible embodiment, the mate of the first limit member and the second limit member is realized by a limit portion disposed at the first limit member and the second limit member. Specifically, the limit portion can be realized by a concave-convex fit. For example, a slot is provided at the first limit member, and a protrusion is disposed at the second limit member. During a rotation, when the positions of the slot and the protrusion overlap, a mate is realized and the two parts are fixed relative to each other at an angle. When an external force is applied to a certain extent, the slot and the protrusion is separated and a new rotation occurs. Since the position of the slot is fixed, the protrusion will mate with a new slot that can be mated with. In order to ensure stability, the protrusions and slots are designed symmetrically with respect to the axis of rotation. In this way, during the rotation process, the protrusions at the symmetrical position mate with the slots at the symmetrical position at the same time, thereby greatly improving the stability degree of the fit of the limit members. The mating manner where the fixed first limit member is provided with multiple slots and the relatively rotating second limit member is provided with protrusions has an advantage that the angle between the slots can be set freely in a circumferential direction, so that the angle during the rotation process can be set according to the preset slot positions, such as 53 degrees, 107 degrees, etc. Therefore, by setting the slot positions, the bracket and the rotation-shaft rocker arm can be set at different angles relative to each other. In another manner, the limit portion at the fixed first limit member is provided as a protrusion, and the limit portion at the second limit member is a slot. At this time, during the rotation process, because the protrusion provides a support effect on a plane where the slot is located, the numbers of slots and protrusions need to be the same, and the slots and protrusions need to be disposed at equal angle intervals. For example, the slots and protrusions are provided at a circumferential interval of 60 degrees, or a circumferential interval of 30 degrees. In this way, the bracket and the rotation-shaft rocker arm of the flip device adjust the angle at equal intervals. Without loss of generality, the first limit member and the second limit member can also be friction surfaces with greater damping.

In one possible embodiment, a pressure needs to be applied between the first limit member and the second limit member to ensure that there is a prestress between the first limit member and the second limit member, thereby ensuring stability of the relative fixation of the first limit member and the second limit member. Therefore, an elastic member may be added to the positioning and connection assembly, and the elastic member may be disposed between a fastener and the second limit member. Thereby, an elastic force is applied to the second limit member along an axial direction of a preset axis, so that the second limit member abuts against the first limit member. The elastic member can be an elastic rubber, a spring, or an elastic sheet. The elastic sheet can be single or multiple stacked. When the stacked elastic sheets are used, because the force on the elastic sheets is a resultant force generated by each elastic sheet, the elastic force generated by the stacked elastic sheets can be fine-tuned by increasing or decreasing the number of the elastic sheets, so as to ensure that the elastic force generated by the elastic member is not too large or too small. Too large elastic force is likely to cause elastic fatigue and shorten the life of the elastic member. Too small elastic force is disadvantageous to the compression of the limit member during rotation.

In one possible embodiment, a fastener includes a shaft portion and an end, and the shaft portion sequentially passes through a hole at the elastic member, a hole at the second limit member, a hole at the first limit member, and a hole at the rotation-shaft rocker arm. The end abuts against the elastic member.

In one possible embodiment, the fastener is in an interference fit with the second limit member and the rotation-shaft rocker arm, and is inscribed in the holes at the elastic member and a first fixation member, so that the rotation-shaft rocker arm can drive the second limit member to rotate through the fastener, and further generate relative rotation with the elastic sheet and the first limit member. One manner to achieve the interference fit is to make the cross-section of the shaft portion of the fastener, the hole at the second limit member, and the hole at the fourth hole limit member have the same opening shape, and the shape of the opening hinders the relative rotation. For example, the shape of the opening may be one of a racetrack shape, an oval shape, a square, a rectangle, or the like.

In one possible embodiment, since the bracket and the rotation-shaft rocker arm rotate relatively, a relative rotation limit of the bracket and the rotation-shaft rocker arm is at a position where the two coincide. Because of the stress at the rotation shaft, it is difficult for the bracket and the rotation-shaft rocker arm to keep a close coincidence on a plane, which is true even if a limit portion is set at the position of the coincident plane to ensure that the two coincide. In order to make the bracket and the rotation-shaft rocker arm able to fit closely, the limit portion is set at an "over-coincidence" position. One manner to achieve the over-coincidence is to make an angle between the limit portion and the coincident plane be a small negative angle, instead of being 0 degrees. For example, the angle can be selected between -1 degrees and -3 degrees. In this way, a pressure can be applied between the rotation-shaft rocker arm and the bracket through the limit member, so as to ensure that the two can fit closely.

In one possible embodiment, the bracket further includes a body, and the first limit member is connected to the body. There is one single first limit member, and the single first limit member mates with the second limit member. Or, there are multiple first limit members, the multiple first limit members are connected to at least two ends of the body, and the multiple first limit members all mate with the second limit member.

In one possible embodiment, the bracket includes a body, and an accommodation slot recessed inward from a side of the body is provided at the body. The positioning and connection assembly is at least partially accommodated in the accommodation slot.

In one possible embodiment, the flip device includes a bracket, where the bracket includes a connection member and a limit slot is formed at a side wall of the connection member, and a rotation-shaft rocker arm. The rotation-shaft rocker arm includes a rocker arm and a limit protrusion. One end of the rocker arm is rotatably connected with the connection member, and the rocker arm can rotate relative to the connection member around a preset axis and drive the limit protrusion to rotate relative to the limit slot. When the rocker arm rotates to a preset angle relative to the connection member, the limit protrusion mates with the limit slot to keep the angel between the rocker arm and the bracket at the preset angle.

In one possible embodiment, the rotation-shaft rocker arm further includes a fastener and a rotation member. The limit protrusion is formed at the rotation member, and the fastener is used for fixing the rocker arm, the rotation member and the connection member in an axial direction of the preset axis. The rotation of the rocker arm can drive the fastener and the rotation member to rotate.

In one possible embodiment, the rotation-shaft rocker arm further includes an elastic member and the elastic member is disposed between the fastener and the rotation member. The elastic member is used for applying an elastic force to the rotation member in the axial direction of the preset axis, so that the limit protrusion abuts against the connection member.

In one possible embodiment, there are multiple elastic members, and the multiple elastic members are stacked and disposed between the fastener and the rotation member.

In one possible embodiment, a first hole is provided at the elastic member, a second hole is provided at the rotation member, a third hole is provided at the connection member, and a fourth hole is provided at the rocker arm. The fastener passes through the first hole, the second hole, the third hole, and the fourth hole in sequence and fixes the elastic member, the rotation member, the connection member, and the rocker arm in the axial direction of the preset axis.

In one possible embodiment, the fastener includes an end portion and a shaft portion that are fixedly connected. The end portion abuts against the elastic member, and the shaft portion passes through the first hole, the second hole, the third hole and the fourth hole. The shape of the shaft portion matches the shape of the second hole and the fourth hole, so that the fastener, the rotation member, and the rocker arm rotate synchronously.

In one possible embodiment, the opening size of the first hole is larger than the size of the cross-section of the shaft portion, so that the shaft portion can rotate relative to the elastic member.

In one possible embodiment, the opening size of the third hole is larger than the size of the cross-section of the shaft portion, so that the shaft portion can rotate relative to the connection member.

In one possible embodiment, there are multiple limit slots, and the multiple limit slot are distributed at the connection member at intervals around the preset axis. The limit protrusion can mate with different limit slots to keep the rocker arm and the bracket at different preset angles.

In one possible embodiment, there are multiple limit protrusions. At least two limit protrusions and an orthographic projection point of the preset axis on the rotation member are located at a same line. The included angles between lines connecting at least two limit slots and the orthographic projection point of the preset axis on the connection member are acute angles, and the included angle range is (0, 3] degrees.

In one possible embodiment, the bracket further includes a body, and the connection member is connected to the body. There is one single connection member, and the limit slot at the single connection member mates with the limit protrusion. Or, the bracket further includes a body, and there are multipole connection members. The multiple connection members are connected to at least two ends of the body. Each of the connection members is provided with the limit slot and the limit slots at the multiple connection members mate with the limit protrusions.

In one possible embodiment, the bracket further includes a body, and the connection member is connected to a side of the body. A receiving slot recessed inward from the side is formed at the body, and the rotation-shaft rocker arm is at least partially received in the receiving slot.

In one possible embodiment, the limit protrusion is disposed at a side wall of the rocker arm.

In one possible embodiment, a camera is provided and includes a camera body, a screen, and a flip device. The other end of the rocker arm is connected to the camera body, and the screen is fixed at the bracket. A receiving slot is formed at the camera body, and the other end of the rocker arm is connected in the receiving slot. The rocker arm can rotate relative to the camera body so that the side wall of the rocker arm can extend in or out of the receiving slot.

In one possible embodiment, the preset angles are non-uniformly distributed along a rotation plane of the rotation-shaft rocker arm and the bracket (as shown in FIG. 1, a plane perpendicular to the Z axis), or the preset angles are uniformly distributed along the rotation plane.

In one possible embodiment, the rotation-shaft rocker arm has a U-shaped or H-shaped structure. The two arms of the U-shaped or H-shaped form the two arms of the rotation-shaft rocker arm. The U-shaped or H-shaped two arms are rotatably connected with the bracket body.

In the description of the embodiments of the present disclosure, it should be understood that the terms "first" and "second" are only used for descriptive purposes, and cannot be understood as indicating or implying relative importance or implicitly indicating the quantity of the indicated technical features. Therefore, the features defined with "first" and "second" may explicitly or implicitly include one or more of the features. In the description of the embodiments of the present disclosure, "multiple" means two or more, unless otherwise clearly and specifically defined. Those skilled in the art can know that, because the components in the flip device in the disclosure generate a relative rotational movement, therefore there are two directions. One direction is along the axial direction and the other direction is perpendicular to the axial direction.

In the description of the embodiments of the present disclosure, it should be noted that, unless otherwise clearly specified and limited, the terms "mounting," "connecting," and "connected" should be understood in a broad way. For example, it can be a fixed connection or a detachable connection, or an integral connection. It can be a mechanical connection or an electrical connection, or it can communicate with each other. It can be directly connected, or indirectly connected through an intermediate medium. It can be an internal communication of two components or an interaction relationship between two components. For those of ordinary skill in the art, the specific meanings of the above-described terms in the embodiments of this disclosure can be understood according to specific scenarios.

In the description of this disclosure, the description with reference to the terms "one embodiment," "some embodiments," "exemplary embodiments," "examples," "specific examples" or "some examples," etc. means that the specific features, structures, materials, or characteristics described in the embodiments or examples are included in at least one embodiment or example in this disclosure. In this disclosure, the schematic representations of the above-described terms do not necessarily refer to the same embodiment or example. Moreover, the described specific features, structures, materials or characteristics can be combined in any one or more embodiments or examples in an appropriate manner.

Although the embodiments of this disclosure have been shown and described above, it can be understood that the above embodiments are exemplary and should not be construed as limitations to this disclosure. Those of ordinary skill in the art can make changes, modifications, replacements and modifications on the above embodiments within the scope of this disclosure.

## Claims

1. A flip device comprising:
a bracket including a first limit member;
a rotation-shaft rocker arm; and
a positioning and connection assembly including a second limit member for mating with the first limit member;
the rotation-shaft rocker arm is rotatably connected to the bracket through the positioning and connection assembly, the first limit member mates with the second limit member to enable the rotation-shaft rocker arm and the bracket to be fixed relative to each other at a preset angle.

2. The flip device of claim 1, wherein the positioning and connection assembly further includes a fastener, the fastener is used for fixedly connecting the rotation-shaft rocker arm and the second limit member, and the fastener rotates along with the rotation-shaft rocker arm to drive the second limit member to rotate, thereby causing the second limit member to rotate relative to the first limit member.

3. The flip device of claim 2, wherein the rotation-shaft rocker arm rotatably connecting to the bracket through the positioning and connection assembly includes:
the rotation-shaft rocker arm rotating about a preset axis relative to the bracket, and the fastener being used to fix the rotation-shaft rocker arm, the first limit member, and the second limit member in an axial direction of the preset axis.

4. The flip device of claim 3, wherein the positioning and connection assembly further includes an elastic member, the elastic member is disposed between the fastener and the second limit member, the elastic member is used for applying an elastic force to the second limit member in the axial direction of the preset axis, so that the second limit member abuts against the first limit member.

5. The flip device of claim 4, wherein the elastic member is one of the following elastic members:
a single elastic sheet;
at least two elastic sheets stacked between the fastener and the second limit member;
a spring member; or
an elastic rubber member.

6. The flip device of claim 4, wherein the fastener includes an end portion and a shaft portion, the shaft portion passes through a first hole provided at the elastic member, a second hole provided at the second limit member, a third hole provided at the first limit member, and a fourth hole provided at the rotation-shaft rocker arm, the end portion abuts against the elastic member.

7. The flip device of claim 6, wherein a shape of the cross-section of the shaft portion of the fastener matches shapes of the second hole provided at the second limit member and the fourth hole provided at the rotation-shaft rocker arm, so that the fastener rotates with the rotation-shaft rocker arm to drive the second limit member to rotate, thereby causing an elastic sheet and the second limit member to rotate relative to the first limit member.

8. The flip device of claim 7, wherein a cross-section of the shaft portion of the fastener, the second hole provided at the second limit member, and the fourth hole provided at the rotation-shaft rocker arm have a same first shape.

9. The flip device of claim 8, wherein the same first shape causes the fastener to rotate when the rotation-shaft rocker arm rotates, thereby driving the second limit member to rotate.

10. The flip device of claim 3, wherein a first limit portion is formed at the first limit member, and a second limit portion is formed at the second limit member to fit with the first limit portion.

11. The flip device of claim 10, wherein the first limit portion is a protrusion, and the second limit portion is a limit slot, or the first limit portion is a limit slot and the second limit portion is a protrusion.

12. The flip device of claim 10, wherein there are multiple first limit portions, the second limit portion mates with various first limit portion of the multiple first limit portions to enable the rotation-shaft rocker arm and the bracket to be fixed relative to each other at different preset angles.

13. The flip device of claim 10, wherein a plurality of sets of radially paired first limit portions are distributed at the first limit member in a circumferential direction of a preset axis, the second limit portion mates with various first limit portions so that the rotation-shaft rocker arm and the bracket can be fixed relative to each other at different preset angles.

14. The flip device of claim 13, wherein one set of the plurality of sets of radially paired first limit portions is at a small angle to a plane of the bracket, and when the second limit portion fits with the first limit portion, there is a prestress between the bracket and the rotation-shaft rocker arm.

15. The flip device of claim 14, wherein a range of the small angle is (0, 3] degrees.

16. The flip device of claim 1, wherein:
the bracket further includes a body, the first limit member is connected to the body, there is one single first limit member, and the single first limit member mates with the second limit member; or
the bracket further includes a body, there are multiple first limit members, the multiple first limit members are connected to at least two ends of the body, and the multiple first limit members all mate with the second limit member.

17. The flip device of claim 1, wherein the bracket includes a body, an accommodation slot recessed inward from a side of the body is provided at the body, and the positioning and connection assembly is at least partially accommodated in the accommodation slot.

18. The flip device of claim 1, wherein the preset angles are non-uniformly distributed along a rotation plane of the rotation-shaft rocker arm and the bracket, or the preset angles are uniformly distributed along the rotation plane.

19. The flip device of claim 1, wherein the rotation-shaft rocker arm has a U-shaped or H-shaped structure.

20. A camera comprising:
a camera body;
a screen; and
a flip device including a bracket, a rotation-shaft rocker arm, and a positioning and connection assembly, the rotation-shaft rocker arm is connected to the camera body, the screen is fixed at the bracket, the bracket includes a first limit member, the positioning and connection assembly includes a second limit member for mating with the first limit member;
the rotation-shaft rocker arm is rotatably connected to the bracket through the positioning and connection assembly, the first limit member mates with the second limit member to enable the rotation-shaft rocker arm and the bracket to be fixed relative to each other at a preset angle.

21. The camera of claim 20, wherein the positioning and connection assembly further includes a fastener, the fastener is used for fixedly connecting the rotation-shaft rocker arm and the second limit member, and the fastener rotates along with the rotation-shaft rocker arm to drive the second limit member to rotate, thereby causing the second limit member to rotate relative to the first limit member.

22. The camera of claim 21, wherein the rotation-shaft rocker arm rotatably connecting to the bracket through the positioning and connection assembly includes:
the rotation-shaft rocker arm rotating about a preset axis relative to the bracket, and the fastener being used to fix the rotation-shaft rocker arm, the first limit member, and the second limit member in an axial direction of the preset axis.

23. The camera of claim 22, wherein the positioning and connection assembly further includes an elastic member, the elastic member is disposed between the fastener and the second limit member, the elastic member is used for applying an elastic force to the second limit member in the axial direction of the preset axis, so that the second limit member abuts against the first limit member.

24. The camera of claim 23, wherein the elastic member is one of the following elastic members:
a single elastic sheet;
at least two elastic sheets stacked between the fastener and the second limit member;
a spring member; or
an elastic rubber member.

25. The camera of claim 23, wherein the fastener includes an end portion and a shaft portion, the shaft portion passes through a first hole provided at the elastic member, a second hole provided at the second limit member, a third hole provided at the first limit member, and a fourth hole provided at the rotation-shaft rocker arm, the end portion abuts against the elastic member.

26. The camera of claim 25, wherein a shape of the cross-section of the shaft portion of the fastener matches shapes of the second hole provided at the second limit member and the fourth hole provided at the rotation-shaft rocker arm, so that the fastener rotates with the rotation-shaft rocker arm to drive the second limit member to rotate, thereby causing an elastic sheet and the second limit member to rotate relative to the first limit member.

27. The camera of claim 26, wherein a cross-section of the shaft portion of the fastener, the second hole provided at the second limit member, and the fourth hole provided at the rotation-shaft rocker arm have a same first shape.

28. The camera of claim 27, wherein the same first shape causes the fastener to rotate when the rotation-shaft rocker arm rotates, thereby driving the second limit member to rotate.

29. The camera of claim 22, wherein a first limit portion is formed at the first limit member, and a second limit portion is formed at the second limit member to fit with the first limit portion.

30. The camera of claim 29, wherein the first limit portion is a protrusion, and the second limit portion is a limit slot, or the first limit portion is a limit slot and the second limit portion is a protrusion.

31. The camera of claim 29, wherein there are multiple first limit portions, the second limit portion mates with various first limit portion of the multiple first limit portions to enable the rotation-shaft rocker arm and the bracket to be fixed relative to each other at different preset angles.

32. The camera of claim 29, wherein a plurality of sets of radially paired first limit portions are distributed at the first limit member in a circumferential direction of a preset axis, the second limit portion mates with various first limit portions so that the rotation-shaft rocker arm and the bracket can be fixed relative to each other at different preset angles.

33. The camera of claim 32, wherein one set of the plurality of sets of radially paired first limit portions is at a small angle to a plane of the bracket, and when the second limit portion fits with the first limit portion, there is a prestress between the bracket and the rotation-shaft rocker arm.

34. The camera of claim 33, wherein a range of the small angle is (0, 3] degrees.

35. The camera of claim 20, wherein:
the bracket further includes a body, the first limit member is connected to the body, there is one single first limit member, and the single first limit member mates with the second limit member; or
the bracket further includes a body, there are multiple first limit members, the multiple first limit members are connected to at least two ends of the body, and the multiple first limit members all mate with the second limit member.

36. The camera of claim 20, wherein the bracket includes a body, an accommodation slot recessed inward from a side of the body is provided at the body, and the positioning and connection assembly is at least partially received in the accommodation slot.

37. The camera of claim 20, wherein the preset angles are non-uniformly distributed along a rotation plane of the rotation-shaft rocker arm and the bracket, or the preset angles are uniformly distributed along the rotation plane.

38. The camera of claim 20, wherein the rotation-shaft rocker arm has a U-shaped or H-shaped structure.

39. The camera of any of claims 20-38, wherein a receiving slot is formed at the camera body, the other end of the rotation-shaft rocker arm is connected in the receiving slot, and the rotation-shaft rocker arm rotates relative to the camera body so that a side wall of the rotation-shaft rocker arm extends in or out of the receiving slot.

40. A flip device comprising:
a bracket;
a rotation-shaft rocker arm; and
a positioning and connection assembly;
the rotation-shaft rocker arm is rotatably connected with the bracket through the positioning and connection assembly, and switches between a rotation state and a fixation state with a change of the rotation angle.
